# EUROPEAN PATENT SPECIFICATION

(11) **EP 3 507 689 B1**
(45) Date of publication and mention of the grant of the patent: **08.07.2020**
(21) Application number: 17758213.7
(22) Date of filing: 01.09.2017
(51) Int. Cl.: G06F 9/44, G06F 8/41

(54) **JAVA CARD APPLICATION PACKAGE USED AS A LIBRARY PACKAGE**
JAVA-CARD-ANWENDUNGSPAKET ZUR VERWENDUNG ALS EIN BIBLIOTHEKSPAKET
PROGICIEL D'APPLICATION DE CARTE JAVA UTILISE EN TANT QUE PROGICIEL DE BIBLIOTHEQUE

(30) Priority: 02.09.2016 EP 16306107
(43) Date of publication of application: 10.07.2019
(73) Proprietor: Thales Dis France SA, 92190 Meudon (FR)
(72) Inventor: CHAFER, Sylvain, 92190 Meudon (FR); GONDOWASITO, Chandra, 92190 Meudon (FR); HOANG, Tri Tam, 92190 Meudon (FR)
(74) Representative: Lotaut, Yacine Diaw
(86) International application number: PCT/EP2017/072010
(87) International publication number: WO 2018/042016

(56) References cited:
- US-A1- 2002 093 856
- US-A1- 2003 051 233

## Description

### TECHNICAL FIELD

The present invention relates to a method for using a java card application package as a library package.

It finds applications, in particular, in smart card products where it is aimed at storing ever growing quantities of applications (applets) despite limited memory resources.

### RELATED ART

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Java Card technology was introduced in 1996 and is now widely used in the smart card domain (notably for SIM cards or ATM cards). It allows java-based applications (applets) to run on smart cards and other similar devices which have limited memory resources. These applications usually do not have large memory footprint when taken individually. However, since the market tends to demand storing more and more of these applications on single java cards, it urges researchers to seek after solutions for reducing the memory space consumed by each application.

The different approaches considered so far all involve modifying the application code itself to reduce its memory footprint. The optimization of the code can be performed by hand, by refactoring byte code or by using a proprietary byte code in order to reduce the memory footprint. However, such optimization is set to be limited in terms of efficiency, and the memory footprint reduction currently achieved this way is non substantial. This calls for new ways of implementing a reduction of the memory space required for storing applications.

An alternative approach is to target binary code used for Personalization stage. After card applets are personalized with customer information, related non-trivial binary code used for this Personalization purpose is not required in next stages of the applets. However, as each Java Card applet is bundled in a closed package-format, it is impossible to perform a partial clean-up on an applet. Hence the desired solution could consist in implementing the binary code associated with the personalization of an application in a separate personalization package and to remove this package once the personalization is complete. Such approach would for instance rely on the implementation of a multi-package design with different packages able to share and link their resources.

A way to achieve this could be to use Java Card Shareable Interface. This way, Shareable Interface Objects (SIO) of an applet package could be accessed from another applet package. However, only accessing SIO of another applet package can prove insufficient in the context of the approach mentioned in the aforementioned paragraph. Furthermore, the Client/Server model embraced by Shareable Interface requires extra setup code and thus generates communication overhead. In the end, using Shareable Interface can reveal to be inappropriate for allowing enough objects to be accessed by another package, and increases the application code size and its execution time.

### SUMMARY

To address these needs, the present invention relates to a method to use a java card applet package as a library package. In particular, the method proposes a way to extend export components of applet packages thus allowing them to be referred as library packages.

A library package export component such as an export file publishes all references of the package internal public resources such as classes, methods and fields. However due to Java Card standard restriction a library package cannot contain an applet package. Reciprocally applet packages a restricted to share only SIO through the Shareable Interface which does not make their public resources visible to other packages. The invention described in an embodiment of the method allows to obtain a hybrid package which can behave as both a library and an applet package.

More specifically, according to a first aspect of the invention there is proposed a method to make a Java Card applet package usable as a library, comprising:
- converting the applet package, said conversion generating a first combination of a first Converted Applet, CAP file and a first export file, and deleting the first export file if said export file contains Shareable Interface Objects, SIO;
- converting the applet package without specifying any applet, said conversion generating a second combination of a second CAP file and a second export file, said second export file containing all public classes and methods including SIO if any, and deleting the second CAP file; and,
- merging the second export file with the first CAP file to generate a third combination of the first CAP file and the second export file, said third combination having both a library capability and an applet package capability.

This invention allows the personalization code to be developed in a separated and removable package, thus opening the way to the reduction of the memory footprint of java card applets. Such memory footprint optimization can allow Java Card to store more applications or, reciprocally, it allows to use cheaper cards, with less memory, to store the same number of applications.

Despite the fact that the CAP file generated by the method is both a library and an applet package which is non-standard as regard to the Java Card specifications, its format remains compliant with said specifications and is therefore acceptable by any Java Card Virtual Machine (JCVM). Consequently, the invention does not have any impact on the products compliance to the Java Card standard.

Another advantage of the invention comes from the possibility of error patching and application by loading fix package(s) on the Java Card without impacting its original content.

Furthermore, customizable features of an application can be implemented from separated packages, if desired. This operation can be realized easily from a package that is quickly developed. Hence embodiments allow quick response to rapid-changing markets.

A second aspect of the invention relates to a computer program product comprising one or more stored sequences of instructions that are accessible to a processor and which, when executed by the processor, cause the processor to perform the steps of a method according to the first aspect.

Finally, a third aspect of the invention proposes a device to make a Java Card applet package useable as a library package comprising a Java Card converter, a deletion unit and a merging unit adapted to perform the following:
- converting the applet package, said conversion generating a first combination of a first Converted Applet, CAP file and a first export file, and deleting the first export file if said export file contains Shareable Interface Objects, SIO;
- converting the applet package through a Java Card Converter without specifying any applet, said conversion generating a second combination of a second CAP file and a second export file, said second export file containing all public classes and methods including SIO if any, and deleting the second CAP file;
- merging the second export file with the first CAP file to generate a third combination of the first CAP file and the second export file, said third combination having both a library capability and an applet package capability.

### BRIEF DESCRIPTION OF THE DRAWINGS

Embodiments of the present invention are illustrated by way of example, and not by way of limitation, in the figures of the accompanying drawings, in which like reference numerals refer to similar elements and in which:
- The Figure 1 is a flow chart illustrating an embodiment of the method of the invention.
- The Figure 2 shows a functional description of a device adapted to perform an embodiment of the method of the invention.

### DESCRIPTION OF PREFERRED EMBODIMENTS

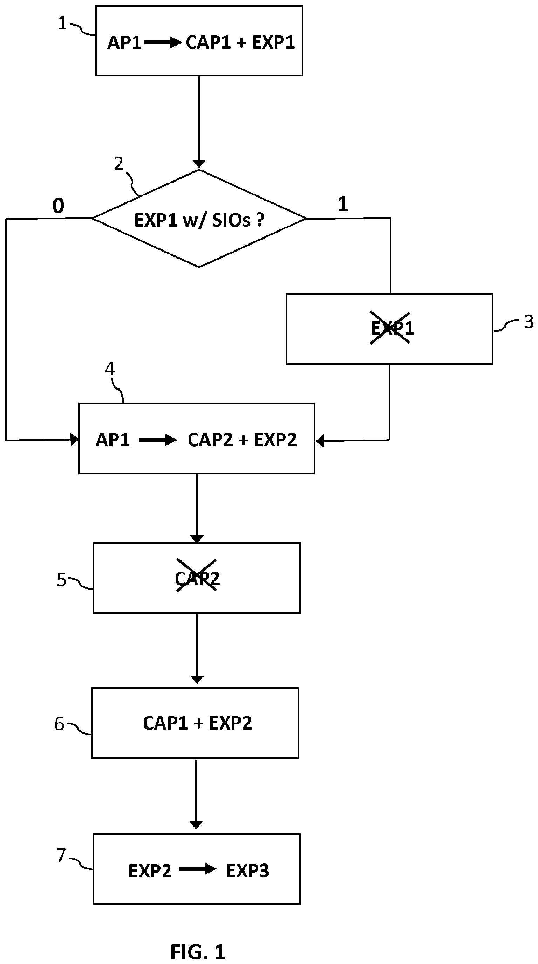

Referring to the Figure 1, there is shown therein a flow chart illustrating different tasks performed according to embodiments of the proposed method to make a Java Card application package usable as a library package.

An applet package, hereinafter referred to as the Applet Package AP1, is converted by a standard Java Card Converter.

At 1, this conversion generates a Converted Applet (CAP) file CAP1 and an export file EXP1. At that stage, only Shareable Interface Objects (SIOs) from AP1 can be shared by AP1 with other packages through a Java Card Shareable Interface.

The export file EXP1 generated by the aforementioned conversion can either contain SIOs or not. This is determined, for instance, at 2. In cases where EXP1 contains SIOs, then at 3 the export file EXP1 is deleted from the memory of the java card. Both cases are then continued by the same tasks. An exemplary embodiment of these tasks will now be further described with reference to the Figure.

The original applet package AP1 is converted again, at 4, by the same Java Card Converter as the Java Card of step 1, or by another Java Card converter. However, this is achieved, this time, while not specifying any applet. This conversion then generates another CAP file, namely CAP2, and another export file, namely EXP2.

The one with ordinary skills in the art will appreciate that a difference with the task performed at 1 resides in the fact that the export file EXP2 generated this way contains all its public resources (including SIOs if any).

Following the above step 4, the CAP file CAP2 is deleted, i.e. erased from the memory of the Java Card, at 5.

In other embodiments of the present invention, which are not represented in the Figure, the steps performed at 1, 2 and 3 on the one hand, and the steps performed at 4 and 5 on the other hand, can be either performed in parallel, or still in sequence as shown but in different order, that is to say steps 4 and 5 first and then steps 1, 2 and 3. In any case, the process goes on with one and the same step, at 6.

At 6, indeed, both CAP file CAP1 and export file EXP2 are merged to form a combination which presents both the capability of an applet package and the capability of a library package. This latter feature offers the possibility that authorized applet packages access public resources from AP1.

At 7, a third export file EXP3 can be generated from the second export file EXP2. This third export file EXP3 only contains the SIOs of EXP2, if any. Thanks to this export file EXP3, any other applet package can access the SIOs of the original applet package AP1.

The above described embodiments allow the personalization code to be developed in a separated and removable package, thus opening the way to the reduction of the memory footprint of java card applets. Such memory footprint optimization can allow Java Card to store more applications or, reciprocally, it allows to use cheaper cards, with less memory, to store the same number of useful applications.

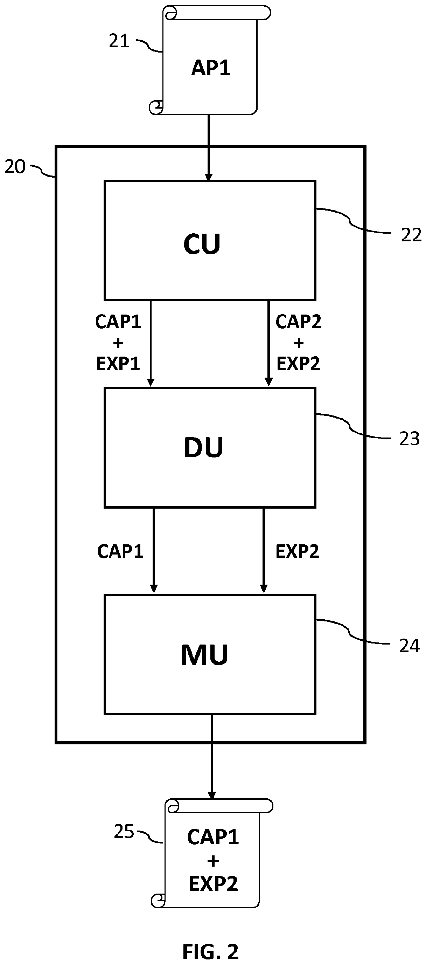

Referring to the Figure 2, there is shown therein a functional description of a device adapted to perform the steps of the method of the invention.

The device 20 is adapted to make a Java Card applet package AP1 21 useable as a library package. The device 20 comprises a Java Card converter (CU) 22, a Deletion Unit (DU) 23 and a Merging Unit (MU) 24 adapted to perform the following:
- converting the applet package AP1 which generates a first combination of a first Converted Applet CAP file CAP1 and a first export file EXP1 and deleting the first export file EXP1 if said export file contains Shareable Interface Objects, (SIOs);
- converting the applet package AP1 again this time generating a second combination of a second CAP file CAP2 and a second export file EXP2 and deleting the second CAP file CAP2;
- merging the second export file with the first CAP file to generate a third combination 25 of the first CAP file CAP1 and the second export file EXP2.

The present invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made.

The invention is defined by the appended claims.

It is stipulated that the reference signs in the claims do not limit the scope of the claims, but are merely inserted to enhance the legibility of the claims.

## Claims

1. A method to make a Java Card applet package useable as a library package, comprising:
- converting (1) the applet package, said conversion generating a first combination of a first Converted Applet, CAP, file and a first export file, and deleting (3) the first export file if (2) said export file contains Shareable Interface Objects, SIO;
- converting (4) the applet package without specifying any applet, said conversion generating a second combination of a second CAP file and a second export file, said second export file containing all public classes and methods including SIO if any, and deleting (5) the second CAP file; and,
- merging (6) the second export file with the first CAP file to generate a third combination of the first CAP file and the second export file, said third combination having both a library capability and an applet package capability.

2. The method of Claim 1, further comprising generating (7) a third export file from the second export file, said third export file only containing the SIOs of said second export file, if any.

3. The method of any one of Claim 2 wherein at least one other applet package can use the third export file to access SIO of the applet package.

4. The method of any one of Claims 1 to 3 wherein merging the second export file with the first CAP file comprises rendering the second export file accessible to authorized applet packages.

5. The method of any one of Claim 4 wherein the authorized applet packages comprise a personalization package containing a personalization code, said personalization code being adapted for the personalization of an applet, and said personalization package being able to access public resources of the applet package through the second export file.

6. The method of Claim 5 wherein the applet package and the personalization package are a multi-package implementation of a main applet intended to be installed into a memory of the Java Card.

7. The method of Claim 6 wherein the personalization package is removed of the Java Card memory once the personalization of the main applet has been completed.

8. A computer program product comprising one or more stored sequences of instructions that are accessible to a processor and which, when executed by the processor, cause the processor to perform the steps of any of Claims 1 to 7.

9. A device to make a Java Card applet package useable as a library package comprising a Java Card converter, a deletion unit and a merging unit adapted to perform the following:
- converting the applet package, said conversion generating a first combination of a first Converted Applet, CAP file and a first export file, and deleting the first export file if said export file contains Shareable Interface Objects, SIO;
- converting the applet package without specifying any applet, said conversion generating a second combination of a second CAP file and a second export file, said second export file containing all public classes and methods including SIO if any, and deleting the second CAP file;
- merging the second export file with the first CAP file to generate a third combination of the first CAP file and the second export file, said third combination having both a library capability and an applet package capability.

## Patentansprüche

1. Verfahren, um ein Java-Card-Applet-Paket als Bibliothekspaket verwendbar zu machen, umfassend:
- Konvertieren (1) des Applet-Pakets, wobei die Konvertierung eine erste Kombination aus einer ersten Converted-Applet-Datei (CAP-Datei) und einer ersten Exportdatei erzeugt, und Löschen (3) der ersten Exportdatei, wenn (2) die Exportdatei SIO (Shareable Interface Objects) enthält;
- Konvertieren (4) des Applet-Pakets ohne Angeben eines beliebigen Applets, wobei die Konvertierung eine zweite Kombination aus einer zweiten CAP-Datei und einer zweiten Exportdatei erzeugt, wobei die zweite Exportdatei alle öffentlichen Klassen und Methoden einschließlich gegebenenfalls SIO enthält, und Löschen (5) der zweiten CAP-Datei; und
- Zusammenführen (6) der zweiten Exportdatei mit der ersten CAP-Datei, um eine dritte Kombination aus der ersten CAP-Datei und der zweiten Exportdatei zu erzeugen, wobei die dritte Kombination sowohl eine Bibliotheksfähigkeit als auch eine Applet-Paketfähigkeit aufweist.

2. Verfahren nach Anspruch 1, ferner umfassend das Erzeugen (7) einer dritten Exportdatei aus der zweiten Exportdatei, wobei die dritte Exportdatei gegebenenfalls nur die SIO der zweiten Exportdatei enthält.

3. Verfahren nach einem der Ansprüche 2, wobei mindestens ein anderes Applet-Paket die dritte Exportdatei verwenden kann, um auf SIO des Applet-Pakets zuzugreifen.

4. Verfahren nach einem der Ansprüche 1 bis 3, wobei das Zusammenführen der zweiten Exportdatei mit der ersten CAP-Datei das Rendern der zweiten Exportdatei für autorisierte Applet-Pakete umfasst.

5. Verfahren nach einem der Ansprüche 4, wobei die autorisierten Applet-Pakete ein Personalisierungspaket umfassen, das einen Personalisierungscode enthält, wobei der Personalisierungscode zur Personalisierung eines Applets angepasst ist und das Personalisierungspaket in der Lage ist, über die zweite Exportdatei auf öffentliche Ressourcen des Applet-Pakets zuzugreifen.

6. Verfahren nach Anspruch 5, wobei das Applet-Paket und das Personalisierungspaket eine aus mehreren Paketen bestehende Implementierung eines Haupt-Applets sind, das in einem Speicher der Java-Card installiert werden soll.

7. Verfahren nach Anspruch 6, wobei das Personalisierungspaket aus dem Speicher der Java-Card entfernt wird, sobald die Personalisierung des Haupt-Applets abgeschlossen ist.

8. Computerprogrammprodukt, umfassend eine oder mehrere gespeicherte Abfolgen von Anweisungen, auf die ein Prozessor zugreifen kann, und die bei Ausführung durch einen Prozessor den Prozessor veranlassen, die Schritte eines der Ansprüche 1 bis 7 auszuführen.

9. Vorrichtung, um ein Java-Card-Applet-Paket als Bibliothekspaket verwendbar zu machen, umfassend einen Java-Card-Konverter, eine Löschungseinheit und eine Zusammenführungseinheit, die ausgelegt ist, um Folgendes durchzuführen:
- Konvertieren des Applet-Pakets, wobei die Konvertierung eine erste Kombination aus einer ersten Converted-Applet-Datei (CAP-Datei) und einer ersten Exportdatei erzeugt, und Löschen der ersten Exportdatei, wenn die Exportdatei gemeinsam nutzbare Schnittstellenobjekte (SIO) enthält;
- Konvertieren des Applet-Pakets ohne Angeben eines beliebigen Applets, wobei die Konvertierung eine zweite Kombination aus einer zweiten CAP-Datei und einer zweiten Exportdatei erzeugt, wobei die zweite Exportdatei alle öffentlichen Klassen und Methoden einschließlich gegebenenfalls SIO enthält, und Löschen der zweiten CAP-Datei;
- Zusammenführen der zweiten Exportdatei mit der ersten CAP-Datei, um eine dritte Kombination aus der ersten CAP-Datei und der zweiten Exportdatei zu erzeugen, wobei die dritte Kombination sowohl eine Bibliotheksfähigkeit als auch eine Applet-Paketfähigkeit aufweist.

## Revendications

1. Procédé permettant de rendre un progiciel d'applet à carte Java utilisable comme progiciel de bibliothèque, comprenant :
- la conversion (1) du progiciel d'applet, ladite conversion générant une première combinaison d'un premier fichier d'applet convertie, CAP, et d'un premier fichier d'exportation et la suppression (3) du premier fichier d'exportation si (2) ledit fichier d'exportation contient des objets partageables d'interface, SIO ;
- la conversion (4) du progiciel d'applet sans spécifier d'applet, ladite conversion générant une deuxième combinaison d'un second fichier de CAP et d'un deuxième fichier d'exportation, ledit deuxième fichier d'exportation contenant toutes les classes et méthodes publiques, y compris des SIO le cas échéant, et la suppression (5) du second fichier de CAP ; et
- la fusion (6) du deuxième fichier d'exportation avec le premier fichier de CAP pour générer une troisième combinaison du premier fichier de CAP et du deuxième fichier d'exportation, ladite troisième combinaison ayant à la fois une capacité de bibliothèque et une capacité de progiciel d'applet.

2. Procédé selon la revendication 1, comprenant en outre la génération (7) d'un troisième fichier d'exportation à partir du deuxième fichier d'exportation, ledit troisième fichier d'exportation contenant uniquement les SIO dudit deuxième fichier d'exportation, le cas échéant.

3. Procédé selon l'une quelconque de la revendication 2, dans lequel au moins un autre progiciel d'applet peut utiliser le troisième fichier d'exportation pour accéder aux SIO du progiciel d'applet.

4. Procédé selon l'une quelconque des revendications 1 à 3, dans lequel la fusion du deuxième fichier d'exportation avec le premier fichier de CAP comprend le fait de rendre le deuxième fichier d'exportation accessible aux progiciels d'applet autorisés.

5. Procédé selon l'une quelconque de la revendication 4, dans lequel les progiciels d'applet autorisés comprennent un progiciel de personnalisation contenant un code de personnalisation, ledit code de personnalisation étant adapté pour la personnalisation d'une applet et ledit progiciel de personnalisation pouvant accéder à des ressources publiques du progiciel d'applet via le deuxième fichier d'exportation.

6. Procédé selon la revendication 5, dans lequel le progiciel d'applet et le progiciel de personnalisation sont une implémentation multi-progiciel d'une applet principale destinée à être installée dans une mémoire de la carte Java.

7. Procédé selon la revendication 6, dans lequel le progiciel de personnalisation est supprimé de la mémoire de la carte Java une fois la personnalisation de l'applet principale terminée.

8. Produit de programme informatique comprenant une ou plusieurs séquences d'instructions stockées qui sont accessibles à un processeur et qui, lorsqu'elles sont exécutées par le processeur, amènent le processeur à exécuter les étapes selon l'une quelconque des revendications 1 à 7.

9. Dispositif permettant de rendre un progiciel d'applet à carte Java utilisable comme progiciel de bibliothèque, comprenant un convertisseur de carte Java, une unité de suppression et une unité de fusion, adaptés pour effectuer les opérations suivantes :
- convertir le progiciel d'applet, ladite conversion générant une première combinaison d'un premier fichier d'applet convertie, CAP, et d'un premier fichier d'exportation et supprimant le premier fichier d'exportation si ledit fichier d'exportation contient des objets d'interface partageables, SIO ;
- convertir le progiciel d'applet sans spécifier d'applet, ladite conversion générant une deuxième combinaison d'un second fichier de CAP et d'un deuxième fichier d'exportation, ledit deuxième fichier d'exportation contenant toutes les classes et méthodes publiques, y compris des SIO le cas échéant, et supprimant le second fichier de CAP ;
- fusionner le deuxième fichier d'exportation avec le premier fichier de CAP pour générer une troisième combinaison du premier fichier de CAP et du deuxième fichier d'exportation, ladite troisième combinaison ayant à la fois une capacité de bibliothèque et une capacité de progiciel d'applet.
